Europäisches Patentamt

European Patent Office

Office européen des brevets

(19)

(11) Numéro de publication: **0 242 311 B1**

# FASCICULE DE BREVET EUROPÉEN

(12)

(45) Date de publication de fascicule du brevet:
**26.06.91**

(51) Int. Cl.⁵: **A01D 34/66**

(21) Numéro de dépôt: **87440020.3**

(22) Date de dépôt: **13.04.87**

(54) **Faucheuse rotative avec barre de coupe et structure support.**

(30) Priorité: **17.04.86 FR 8605680**

(43) Date de publication de la demande:
**21.10.87 Bulletin 87/43**

(45) Mention de la délivrance du brevet:
**26.06.91 Bulletin 91/26**

(84) Etats contractants désignés:
**AT DE ES FR GB IT NL SE**

(56) Documents cités:
**EP-A- 0 009 134       DE-A- 2 418 154**
**FR-A- 2 089 224       FR-A- 2 171 674**
**GB-A- 2 089 634       US-A- 3 965 658**

(73) Titulaire: **KUHN S.A.**
**4, Impasse des Fabriques**
**F-67700 Saverne(FR)**

(72) Inventeur: **Ermacora, Rino**
**5, rue de Monswiller**
**Ottersthal F-67700 Saverne(FR)**

Rank Xerox (UK) Business Services

Description

La présente invention concerne une faucheuse comprenant au moins un groupe de fauche muni d'une barre de coupe sur la face supérieure de laquelle sont disposés des organes de coupe montés rotatifs autour d'axes dirigés vers le haut, à l'aide d'arbres guidés en rotation dans le carter de la barre de coupe et une structure support disposée à une certaine distance au-dessus de la barre de coupe et liée à la barre de coupe, ladite structure support comportant un longeron s'étendant transversalement à la direction d'avance, auquel est liée une jambe s'étendant vers le bas en direction d'un organe de coupe de la barre de coupe, ladite jambe étant liée à l'arbre dudit organe de coupe au moyen d'un palier.

On connaît une telle faucheuse, p.ex. la demande de brevet GB-A- 2089634, dont le palier par l'intermédiaire duquel la jambe de la structure support est liée à l'arbre de l'organe de coupe extérieur situé à l'extrémité correspondante de la barre de coupe, qui est guidé dans le carter de la barre de coupe par deux roulements, est constitué par un roulement rotulant. Du reste, dans cette faucheuse connue, la jambe de la structure support est liée rigidement à l'une des extrémités du longeron de la structure support. A son autre extrémité, le longeron de la structure support est lié à un dispositif de transmission qui s'étend au-dessus de l'organe de coupe agencé à l'extrémité correspondante de la barre de coupe et dénommé premier organe de coupe. L'arbre de ce premier organe de coupe qui est également guidé en rotation dans le carter de la barre de coupe, est prolongé vers le haut et pénètre dans le dispositif de transmission où il est guidé en rotation par deux autres roulements. Cet arbre sert à entraîner le premier organe de coupe et à transmettre le mouvement depuis le dispositif de transmission aux éléments d'entraînement logés à l'intérieur du carter de la barre de coupe et servant à l'entraînement en rotation des organes de coupe suivants.

Simultanément, cet arbre sert également à lier le carter de la barre de coupe au dispositif de transmission, tout comme l'arbre de l'organe de coupe extérieur qui sert à lier ledit carter à la jambe de la structure support.

Cette faucheuse connue comporte des inconvénients.

Un premier inconvénient concerne la répartition inégale de l'absorption des efforts et des chocs qui s'exercent sur le carter pendant le travail. En effet, pendant le travail, le carter de le faucheuse glisse sur le sol. Il est en conséquence continuellement soumis à l'effort de résistance à l'avancement qui est dirigé horizontalement de l'avant vers l'arrière, et qui varie continuellement étant donné que le terrain sur lequel opère la faucheuse n'est jamais rigoureusement plan. Cet effort se transforme même quelquefois en chocs, quand le carter rencontre un obstacle se trouvant sur le sol. Or, comme l'extrémité de la barre de coupe où s'étend la jambe de la structure support, est liée à ladite jambe au moyen d'un roulement rotulant, le moment qui tend à faire pivoter le carter de la barre de coupe vers l'arrière, produit par cet effort de résistance à l'avancement et les chocs en cas de rencontre avec un obstacle, est entièrement encaissé par les roulements guidant l'arbre du premier organe de coupe s'étendant sous le dispositif de transmission et qui pénètre à l'intérieur dudit dispositif de transmission. Il s'ensuit que lesdits roulements ont une durée de vie relativement limitée.

Un deuxième inconvénient de la faucheuse réside dans la difficulté de monter la structure support sur la barre de coupe. En effet, le carter de la barre de coupe est réalisé à partir de tôles pliées, tandis que la structure support est réalisée par mécano-soudure. Il en découle que les tolérances de fabrication nécessaires doivent être relativement larges. En sus, ces organes peuvent présenter une certaine déformation initiale. Ainsi, lors du montage de la structure support sur la barre de coupe, on est obligé de déformer la barre de coupe qui est l'organe le plus flexible, de sorte que l'on introduit dès le départ des contraintes non négligeables dans les roulements qui guident en rotation les arbres des organes de coupe extrêmes.

Cette première faucheuse connue comporte encore un troisième inconvénient. En effet, le palier rotulant ainsi qu'une partie de la jambe de la structure support, s'étendent à l'intérieur d'un tambour disposé au-dessus de l'organe de coupe extérieur. Le palier rotulant qui lie l'arbre de l'organe de coupe extérieur et du tambour à la jambe, nécessite un espace relativement important entre la face supérieure dudit tambour et la jambe. Des débris végétaux et de la poussière peuvent ainsi s'introduire à l'intérieur du tambour. Lorsque la masse des débris végétaux et de la poussière devient importante, il se produit des balourds qui augmentent la charge sur le palier rotulant. En sus, il se produit des frottements qui échauffent ledit palier rotulant de sorte que sa durée de vie est considérablement diminuée.

On connaît une autre faucheuse dont la structure support est munie de deux jambes situées à chacune de ses extrémités. Ces jambes s'étendent vers le bas en direction des organes de coupe s'étendant aux extrémités correspondantes de la barre de coupe. Ces jambes sont chacune liées aux arbres des organes de coupe extrêmes qui sont guidés dans le carter de la barre de coupe par deux roulements, au moyen d'un palier à deux roulements d'axe de rotation confondu avec l'axe de l'arbre des organes de coupe correspondants. L'arbre de chaque organe de coupe extrême s'étend jusqu'au niveau du longeron de la structure support où il est en prise au moyen d'engrenages avec un arbre d'entraînement guidé en rotation à l'intérieur du longeron de la structure support. Lesdits arbres des organes de coupe extrêmes servent à entraîner en rotation leur organe de coupe de même qu'un certain nombre d'organes de coupe suivants grâce à des éléments d'entraînement logés à l'intérieur du carter de la barre de coupe. Simultanément ces arbres servent également à lier le carter de la barre de coupe à la structure support.

Cette autre faucheuse connue comporte également des inconvénients.

Un premier inconvénient réside là aussi dans la difficulté de monter la structure support sur la barre de coupe. En effet, compte tenu des tolérances de fabrication relativement larges que nécessitent les modes de fabrication de la barre de coupe et de la structure support, il est également nécessaire de déformer la barre de coupe qui est l'organe le plus flexible pour pouvoir faire correspondre les axes des arbres des organes de coupe extrêmes guidés dans les jambes de la structure support, avec les axes des paliers à deux roulements de la barre de coupe dans lesquels doivent pénétrer les extrémités des arbres des organes de coupe extrêmes.

Un deuxième inconvénient de cette autre faucheuse connue réside dans les contraintes extrêmement importantes que sont amenés à absorber pendant le travail les roulements qui guident en rotation les arbres des organes de coupe extrêmes. En effet, pendant le travail, le carter de la barre de coupe glisse sur le sol qui présente des irrégularités plus ou moins importantes. Ceci entraîne des efforts dirigés de bas en haut sur le carter de la barre de coupe qui provoquent la flexion dudit carter. Durant cette flexion, le carter tire sur l'extrémité des arbres des organes de coupe extrêmes avec un effort très important, compte tenu de la direction de cet effort par rapport à la direction des efforts qui l'engendrent. Cet effort très important est entièrement encaissé par les roulements qui guident en rotation les arbres des organes de coupe extrêmes.

Il en découle que ces roulements ont également une durée de vie relativement limitée.

Les faucheuses de l'art antérieur occasionnent ainsi des coûts de réparation très élevés aux agriculteurs qui les acceptent difficilement. En sus, si la casse des roulements se produit pendant la saison, ils peuvent perdre une grande partie, voire la totalité de leur récolte, ce qui représenterait pour beaucoup d'entre eux une catastrophe.

Le but de la présente invention est de remédier aux inconvénients des faucheuses connues.

A cet effet, la faucheuse selon l'invention est caractérisée par le fait que d'une manière connue en soi, le palier qui lie la jambe à l'arbre d'un organe de coupe, est constitué par un guidage cylindrique dont l'axe est confondu avec l'axe de l'arbre dudit organe de coupe, et que le dispositif de liaison liant la jambe au longeron comporte une articulation cylindrique d'axe dirigé sensiblement perpendiculairement au plan contenant les axes de rotation des organes de coupe.

Grâce à cette caractéristique, les roulements qui guident en rotation les arbres des organes de coupe par l'intermédiaire desquels le carter de la barre de coupe est lié d'une part au dispositif de transmission et d'autre part à la structure support, ont une durée de vie substantiellement augmentée, étant donné que d'une part, la répartition de l'effort engendré par la résistance à l'avancement est plus équilibrée, et que d'autre part, les efforts engendrés par la flexion de la barre de coupe vers le haut due aux inégalités du sol, sont beaucoup plus faibles.

En effet, alors que dans la première faucheuse connue le moment qui tend à faire pivoter le carter de la barre de coupe vers l'arrière, produit par l'effort de résistance à l'avancement qui est dirigé horizontalement de l'avant vers l'arrière, est encaissé uniquement par les roulements guidant l'arbre du premier organe de coupe qui s'étend sous le dispositif de transmission, dans la faucheuse selon l'invention, ce moment est repris par les roulements guidant en rotation les arbres des deux organes de coupe par l'intermédiaire desquels le carter de la barre de coupe est lié d'une part au dispositif de transmission et d'autre part à la structure support. Les efforts s'exerçant sur les roulements guidant l'arbre du premier organe de coupe sont ainsi substantiellement diminués, ce qui augmentera la durée de vie de ces roulements.

Par ailleurs, alors que dans la deuxième faucheuse connue, l'effort dirigé de bas en haut s'exerçant sur le carter de la barre de coupe, engendre une traction très importante sur les arbres des organes de coupe extrêmes qui est entièrement encaissée par les roulements guidant en rotation les arbres de ces organes de coupe extrêmes, dans la faucheuse selon l'invention, cet effort de traction est quasi nul, étant donné que la jambe peut pivoter par rapport au longeron autour de l'articulation cylindrique d'axe dirigé sensiblement perpendiculairement au plan contenant les axes de rotation des organes de coupe.

Avantageusement, l'axe de l'articulation cylindrique s'étend dans le proche voisinage de l'axe de l'arbre de l'organe de coupe auquel est liée la jambe.

Préférentiellement, l'axe de l'articulation cylindrique coupe l'axe de l'arbre dudit organe de coupe.

Suivant une autre caractéristique très importante de l'invention, la structure support comporte des moyens compensateurs des déformations et/ou des tolérances de fabrication de la barre de coupe et/ou de la structure support.

Grâce à cette caractéristique, il est possible de régler la structure support de sorte qu'elle puisse être montée sur la barre de coupe sans que cette dernière n'ait à être déformée, comme ceci est le cas dans les faucheuses de l'art antérieur. On évite ainsi d'introduire dès le départ des contraintes dans les roulements qui guident en rotation les arbres des organes de coupe par l'intermédiaire desquels le carter de la barre de coupe est lié d'une part au dispositif de transmission et d'autre part à la structure support.

Avantageusement, ces moyens compensateurs des déformations et/ou des tolérances de fabrication ont une structure permettant une compensation des défauts accumulés dans une direction sensiblement parallèle à la direction du carter de la barre de coupe.

Cette caractéristique permet une adaptation assez aisée de la structure support à la forme de la barre de coupe. En effet, le carter de la barre de coupe présente souvent une flèche initiale, ce qui entraîne que l'arbre de l'organe de coupe auquel est liée la jambe, n'est pas vertical. Grâce à la liaison articulée entre le longeron et la jambe de la structure support, l'axe du palier que définit la jambe peut être amené en coïncidence avec l'axe de l'arbre dudit organe de coupe. Cette amenée en coïncidence de l'axe du palier défini par la jambe avec l'axe de l'arbre dudit organe de coupe, provoque un déplacement de la structure support par rapport à la partie correspondante de la barre de coupe où elle doit être fixée, dans une direction sensiblement parallèle à la direction du carter de la barre de coupe. Mais, comme les moyens compensateurs des déformations et/ou des tolérances de fabrication autorisent un tel déplacement, la structure support pourra être fixée sur la partie correspondante de la barre de coupe, sans que l'on ait à déformer la barre de coupe.

Selon une caractéristique supplémentaire, il est encore possible que les moyens compensateurs des déformations et/ou des tolérances de fabrication aient une structure permettant une compensation des défauts accumulés dans une direction sensiblement verticale.

Selon une autre caractéristique supplémentaire, il est encore possible que les moyens compensateurs des déformations et/ou des tolérances de fabrication aient une structure permettant une compensation des défauts accumulés dans une direction horizontale sensiblement perpendiculaire à la direction du carter de la barre de coupe.

Selon une autre caractéristique supplémentaire, il est encore possible que les moyens compensateurs des déformations et/ou des tolérances de fabrication aient une structure permettant une compensation des défauts angulaires de l'extrémité de la structure support éloignée de la jambe.

Avec ces caractéristiques supplémentaires, le montage de la structure support sur la barre de coupe se trouve encore davantage facilité.

D'autres caractéristiques et avantages de l'invention sont encore contenus dans les sous-revendications suivantes, ainsi que dans la description ci-dessous d'un exemple de réalisation non limitatif de l'invention faite en référence au dessin annexé sur lequel :

- La figure 1 représente une vue de derrière, partiellement en coupe, du groupe de fauche (barre de coupe et structure support) d'une faucheuse selon l'invention,
- La figure 2 représente une vue de derrière, partiellement en coupe suivant le plan II-II, de la fixation de la structure support à la barre de coupe à l'extrémité de la barre de coupe où s'étend le dispositif de transmission de la barre de coupe,
- La figure 3 représente une vue en coupe suivant les plans III-III de la fixation de la structure support à la barre de coupe à l'extrémité de la barre de coupe où s'étend le dispositif de transmission de la barre de coupe,
- La figure 4 représente une vue en coupe suivant le plan IV-IV de la liaison du longeron et de la jambe de la structure support, et
- La figure 5 représente une vue de dessus de la liaison du longeron et de la jambe de la structure support.

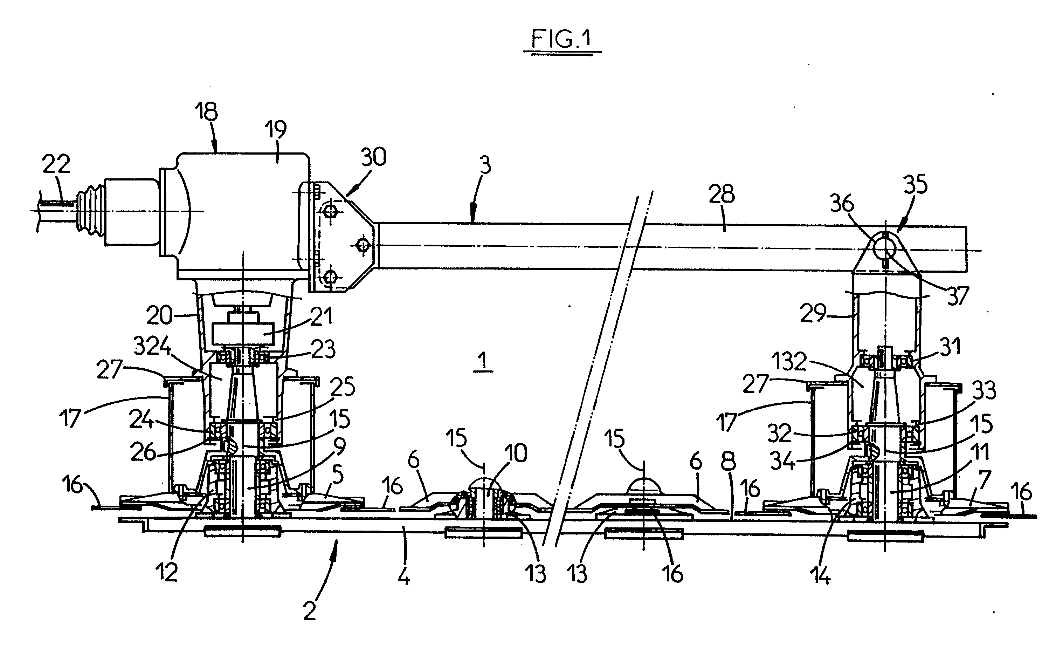

La faucheuse de la figure 1 comporte un groupe de fauche (1) muni d'une barre de coupe (2) et d'une structure support (3) dont la fonction est de rigidifier la barre de coupe (2).

La barre de coupe (2) se compose d'un carter (4) qui support un certain nombre d'organes de coupe (5, 6, 7). Ces organes de coupe (5, 6, 7) s'étendent à la face supérieure (8) du carter (4). Ils sont montés sur un arbre (9, 10, 11) qui est guidé en rotation dans un palier à roulements (12, 13, 14) fixé sur la face supérieure (8) du carter (4). Ces paliers à roulements (12, 13, 14) servent également à lier axialement l'arbre (9, 10, 11) correspondant au carter (4). Les organes de coupe (5, 6, 7) tournent ainsi autour d'axes (15) dirigés vers le haut et de préférence sensiblement verticaux.

Chaque organe de coupe (5, 6, 7) est muni d'un certain nombre d'outils de coupe (16). Les deux organes de coupe extrêmes (5, 7) sont surmontés d'un tambour (17). Ces tambours (17) tournent avec les deux organes de coupe extrêmes (5, 7) et servent ainsi à réduire la largeur de l'andain de fourrage coupé, déposé derrière la barre de coupe (2).

L'entraînement en rotation des organes de coupe (5, 6, 7) est produit par des éléments d'entraînement non représentés, logés d'une manière connue de l'homme de l'art, à l'intérieur du carter (4) de la barre de coupe (2). L'entraînement en rotation des éléments d'entraînement est réalisé par l'arbre (9) du premier organe de coupe (5). A cet effet, l'arbre (9) est prolongé vers le haut et pénètre dans un dispositif de transmission (18) comportant un boîtier (19) et un fût (20) s'étendant à partir du boîtier (19) vers le bas en direction du premier organe de coupe (5). Le boîtier (19) contient, d'une manière connue de l'homme de l'art, des organes de transmission qui sont couplés à l'extrémité supérieure de l'arbre (9) du premier organe de coupe (5) au moyen d'un accouplement élastique (21). Les organes de transmission logés à l'intérieur du dispositif de transmission (18) sont eux-mêmes entraînés en rotation par un arbre à joints universels (22) accouplé, d'une manière connue de l'homme de l'art, à la prise de force du véhicule tracteur non représenté auquel est couplée la faucheuse pendant le travail.

Sur la figure 1, on voit par ailleurs que la partie supérieure de l'arbre (9) du premier organe de coupe (5) est guidée en rotation dans le fût (20) au moyen d'un palier (324) formé par deux roulements (23, 24). Ce palier (324) constitue ainsi un guidage cylindrique de l'arbre (9). Du reste, on voit encore que l'arbre (9) est lié axialement dans le fût (20) au moyen du roulement inférieur (24) qui bute d'une part ·contre un épaulement (25) du fût (20), et d'autre part, contre un circlips (26) monté dans le fût (20). On voit enfin que le fût (20) est encore muni d'un flasque (27) qui obture la partie supérieure du tambour (17) s'étendant au-dessus du premier organe de coupe (5).

A une certaine distance au-dessus du carter (4) de la barre de coupe (2) s'étend la structure support (3). Cette structure support (3) se compose d'un longeron (28) et d'une jambe (29). Le longeron (28) s'étend sensiblement parallèlement au carter (4) tandis que la jambe (29) s'étend vers le bas en direction de l'organe de coupe extérieur (7). Le longeron (28) et la jambe (29) s'étendent ainsi sensiblement dans le plan contenant les axes de rotation (15) des organes de coupe (5, 6, 7). La structure support (3) est fixée par ses deux extrémités aux deux extrémités de la barre de coupe (2). En effet, l'extrémité du longeron (28) éloignée de la jambe (29), est fixée sur le boîtier (19) du dispositif de transmission (18) au moyen d'un dispositif de fixation (30) qui sera décrit ultérieurement, tandis que la jambe (29) est liée à l'arbre (11) de l'organe de coupe extérieur (7). A cet effet, l'arbre (11) de l'organe de coupe extérieur (7) est prolongé vers le haut et pénètre à l'intérieur de la jambe (29). La liaison entre la jambe (29) et la partie supérieure de l'arbre (11) est réalisée au moyen d'un palier (132) formé par deux roulements (31, 32). Ce palier (132) constitue ainsi un guidage cylindrique de l'arbre (11). L'axe de ce guidage cylindrique est ainsi confondu avec l'axe (15) de l'arbre (11). Du reste, on voit également que l'arbre (11) est lié axialement dans la jambe (29) au moyen du roulement inférieur (32) qui bute d'une part contre un épaulement (33) de la jambe (29), et d'autre part, contre un circlips (34) monté dans la jambe (29). On voit enfin également que la jambe (29) est encore munie d'un flasque (27) qui obture la partie supérieure du tambour (17) s'étendant au-dessus de l'organe de coupe extérieur (7).

Outre leur fonction de réduction de la largeur de l'andain de fourrage coupé déposé derrière la barre de coupe (2), les tambours (17) évitent également que des brins de fourrage coupé ne restent accrochés au fût (20) et/ou à la jambe (29).

La liaison entre le longeron (28) et la jambe (29) est réalisée au moyen d'un dispositif de liaison (35) qui sera décrit ultérieurement plus en détail. Ce dispositif de liaison (35) se compose principalement d'une articulation cylindrique (36) dont l'axe (37) est sensiblement perpendiculaire au plan contenant les axes de rotation (15) des organes de coupe (5, 6, 7), et coupe l'axe (15) de l'arbre (11) de l'organe de coupe extérieur (7).

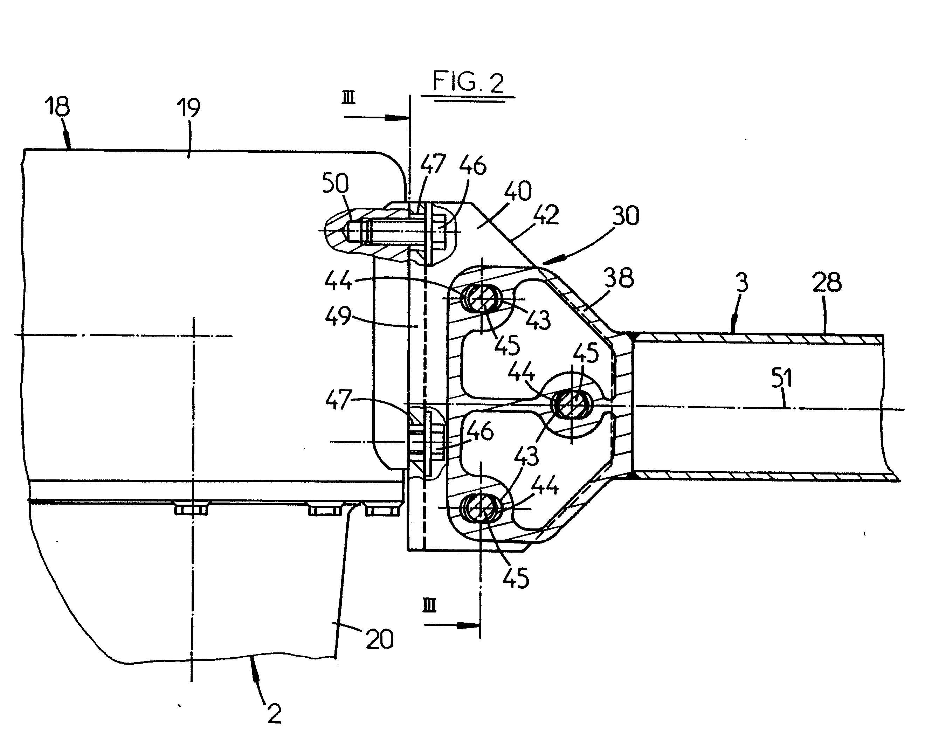

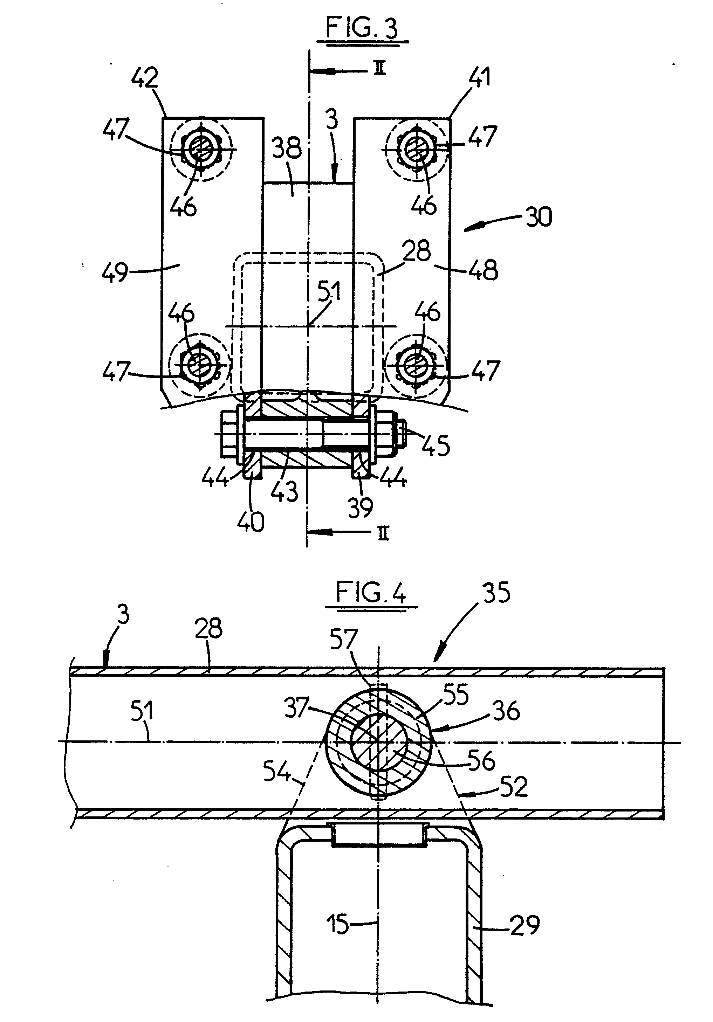

Les figures 2 et 3 montrent plus en détail le dispositif de fixation (30) de la structure support (3) sur la barre de coupe (2) ou plus précisément sur le boîtier (19) du dispositif de transmission (18) de la barre de coupe (2). A cet effet, l'extrémité du longeron (28) située en regard du boîtier (19), comporte une tête de longeron (38) qui s'étend entre l'une des ailes (39, 40) de deux équerres (41, 42). Cette tête de longeron (38) est munie de trois trous (43). Les trous (43) sont oblongs sensiblement dans une direction parallèle à la direction du carter (4) de la barre de coupe (2). En regard des trous oblongs (43) aménagés dans la tête de longeron (38), s'étendent des trous (44) aménagés dans les ailes (39, 40) des équerres (41, 42). Les trous (44) sont dans l'exemple de réalisation représenté ronds. Dans le cadre de l'invention, ils pourraient cependant également, tout comme les trous (43), être oblongs dans une direction parallèle à la direction du carter (4) de la barre de coupe (2). Les trous (43 ; 44) sont traversés par des boulons (45) qui permettent de fixer la tête de longeron (38) sur les équerres (41, 42).

Grâce aux trous oblongs (43), la tête de longeron (38) et par conséquent le longeron (28) de la structure support (3) peuvent être fixés sur le boîtier (19) du dispositif de transmission (18) de la barre de coupe (2), même si la tête de longeron (38) est décalée dans une direction sensiblement parallèle à la direction du carter (4) de la barre de coupe (2) d'un côté ou de l'autre de sa position théorique. En effet, les trous oblongs (43) permettent de faire varier la longueur de la structure support (3) entre l'articulation (36) et l'extrémité de la structure support (3) éloignée de la jambe (29). Les équerres (41, 42) sont, quant-à-elles, fixées sur le boîtier (19) au moyen de vis (46) qui traversent des trous (47) aménagés dans les ailes (48, 49) des équerres (41, 42) et qui sont vissées dans des trous filetés (50) aménagés dans le boîtier (19). Dans l'exemple de réalisation représenté, chaque équerre (41, 42) est fixée sur le boîtier (19) au moyen de deux vis (46). Sur les figures 2 et 3, on voit encore que les trous (47) aménagés dans les ailes (48, 49) des équerres (41, 42) ont un diamètre plus grand que le diamètre des vis (46). Les équerres (41, 42) et par conséquent la tête de longeron (38) du longeron (28) de la structure support (3) peuvent donc être fixées sur le boîtier (19) du dispositif de transmission (18) de la barre de coupe (2) même si l'extrémité du longeron (28) où s'étendent la tête de longeron (38) et les équerres (41, 42), est décalée dans une direction sensiblement verticale et/ou dans une direction horizontale sensiblement perpendiculaire à la direction du carter (4) de la barre de coupe (2) d'un côté ou de l'autre de sa position théorique. De même, la fixation est également possible même si le longeron (28) est légèrement vrillé autour de son axe longitudinal (51).

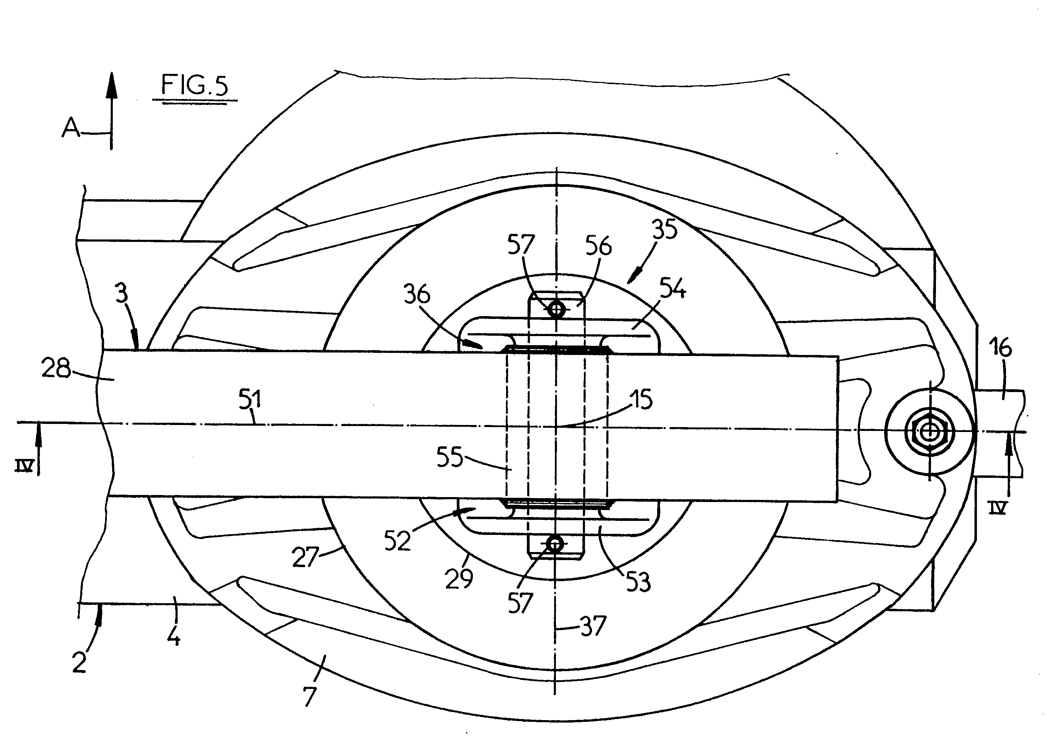

Les figures 4 et 5 montrent plus en détail le dispositif de liaison (35) entre le longeron (28) de la jambe (29) de la structure support (3). Comme dit plus haut, ce dispositif de liaison (35) se compose principalement d'une articulation cylindrique (36) dont l'axe (37) est sensiblement perpendiculaire au plan contenant les axes de rotation (15) des organes de coupe (5, 6, 7). A cet effet, la partie supérieure de la jambe (29) est munie d'une chape (52) comportant deux ailes (53, 54) entre lesquelles s'étend le longeron (28). Le longeron (28) quant-à-lui est muni d'une bague (55) de sorte que le longeron (28) puisse être lié à la jambe (29) au moyen d'un tourillon (56) qui traverse les deux ailes (53, 54) de la chape (52) et la bague (55) du longeron (28). Une fois monté, le déplacement axial du tourillon (56) est verrouillé par deux goupilles (57).

Le montage de la structure support (3) sur la barre de coupe (2) s'opère de la manière suivante. La jambe (29) de la structure support (3) est tout d'abord prémontée sur l'arbre (11) de l'organe de coupe extérieur (7), au moyen des roulements (31, 32) et du circlips (34). On lie ensuite le longeron (28) à la jambe (29) au moyen du tourillon (56). On fixe alors les équerres (41, 42) sur la tête de longeron (38) au moyen des boulons (45) sans toutefois serrer ceux-ci à fond. Puis on amène les équerres (41, 42) en contact avec le boîtier (19) et on les fixe au moyen des vis (46). On bloque enfin les boulons (45) pour fixer solidement la tête de longeron (38) aux équerres (41, 42).

Ce montage de la structure support (3) sur la barre de coupe (2) est possible sans introduire de contraintes initiales dans les roulements qui guident en rotation les arbres (9, 11) des organes de coupe extrêmes (5, 7), même si le carter (4) de la barre de coupe (2) et/ou le longeron (28) sont plus ou moins déformés ou si leurs cotes se trouvent aux limites extrêmes des tolérances. Si le carter (4) est déformé, alors l'axe (15) de l'arbre (11) de l'organe de coupe extérieur (7) n'est pas rigoureusement parallèle à l'axe (15) de l'arbre (9) du premier organe de coupe (5). Le montage est cependant possible grâce au fait que la structure support (3) comporte des moyens compensateurs des déformations et/ou des tolérances de fabrication (articulation (36), trous oblongs (43) dans tête de longeron (28) et trous (47) dans les équerres (41, 42) ayant un diamètre plus grand que le diamètre des vis (46) qui les traversent). Ainsi, l'angle entre la jambe (29) et le longeron (28) peut être modifié et l'extrémité du longeron (28) éloignée de la jambe (29) peut occuper une position différente de sa position théorique, tout en pouvant être fixée sur le dispositif de transmission (18). Cette position réelle de ladite extrémité du longeron (28) peut être décalée par rapport à sa position théorique

- dans une direction sensiblement parallèle à la direction du carter (4) de la barre de coupe (2) (grâce aux trous oblongs (43)), et/ou

- dans une direction sensiblement verticale (grâce aux trous (47) aménagés dans les équerres (41, 42)), et/ou

- dans une direction horizontale sensiblement perpendiculaire à la direction du carter (4) de la barre de coupe (2) (grâce aux trous (47)), et/ou

- angulairement (grâce aux trous (47)).

Pendant le travail, la faucheuse est couplée à un véhicule tracteur qui la tire dans la direction (A) et qui entraîne en rotation ses organes de coupe (5, 6, 7). Pendant ce travail, le groupe de fauche (1) de la faucheuse glisse sur le sol par l'intermédiaire du carter (4) de la barre de coupe (2). Compte tenu du poids avec lequel le carter (4) repose sur le sol, il se développe, lors du mouvement de glissement, un effort de résistance au glissement pouvant dans certains cas être relativement important, compte tenu de la configuration du sol sur lequel glisse le carter (4). Cet effort de résistance au glissement est dans la faucheuse de l'invention absorbé par les roulements guidant en rotation les arbres (9, 11) des deux organes de coupe extrêmes (5, 7).

Par ailleurs, lorsque le carter (4) de la barre de coupe (2) est déformé vers le haut, lors du passage sur une bosse, les efforts sur les roulements guidant en rotation l'arbre (9) du premier organe de coupe (5) dus à cette déformation restent relativement faibles, étant donné que la jambe (29) peut pivoter par rapport au longeron (28) autour de l'axe (37) de l'articulation (36).

La durée de vie des roulements guidant en rotation l'arbre (9) du premier organe de coupe (5) est ainsi substantiellement augmentée.

Diverses modifications peuvent être apportées à l'exemple de réalisation décrit sans qu'on ne sorte pour autant du cadre de la présente invention telle que définie dans les revendications.

## Revendications

1. Faucheuse comprenant au moins un groupe de fauche (1) muni d'une barre de coupe (2) sur la face supérieure (8) de laquelle sont disposés des organes de coupe (5, 6, 7) montés rotatifs autour d'axes (15) dirigés vers le haut, à l'aide d'arbres (9, 10, 11) guidés en rotation dans le carter (4) de la barre de coupe (2), et une structure support (3) disposée à une certaine distance au-dessus de la barre de coupe (2) et liée à la barre de coupe (2), ladite structure support (3) comportant un longeron (28) s'étendant transversalement à la direction d'avance (A), auquel est liée une jambe (29) s'étendant vers le bas en direction d'un organe de coupe (7) de la barre de coupe (2), ladite jambe (29) étant liée à l'arbre (11) dudit organe de coupe (7) au moyen d'un palier (132) caractérisée par le fait que d'une manière connue en soi de palier (132) est constitué par un guidage cylindrique (31, 32) dont l'axe est confondu avec l'axe (15) de l'arbre (11) dudit organe de coupe (7), et que le dispositif de liaison (35) liant la jambe (29) au longeron (28), comporte une articulation cylindrique (36) d'axe (37) dirigé sensiblement perpendiculairement au plan contenant les axes de rotation (15) des organes de coupe (5, 6, 7).

2. Faucheuse selon la revendication 1, caractérisée par le fait que l'axe (37) de l'articulation cylindrique (36) s'étend dans le proche voisinage de l'axe (15) de l'arbre (11) dudit organe de coupe (7), auquel est liée la jambe (29).

3. Faucheuse selon la revendication 2, caractérisée par le fait que l'axe (37) de l'articulation cylindrique (36) coupe l'axe (15) de l'arbre (11) dudit organe de coupe (7), auquel est liée la jambe (29).

4. Faucheuse selon l'une des revendications 1 à 3, caractérisée par le fait que ladite structure support (3) est liée à ses extrémités aux extrémités de la barre de coupe (2), et que la jambe (29) est liée à l'une des extrémités du longeron (28) et s'étend vers le bas en direction de l'organe de coupe extérieur (7) situé à l'extrémité correspondante de la barre de coupe (2).

5. Faucheuse selon l'une des revendications 1 à 4, caractérisée par le fait que l'articulation cylindrique (36) est constituée par une chape (52) solidaire de la partie supérieure de la jambe (29), entre les ailes (53, 54) de laquelle s'étend le longeron (28), et par un tourillon (56) traversant les ailes (53, 54) de la chape (52) et le longeron (28).

6. Faucheuse selon l'une des revendications 1 à 5, caractérisée par le fait que le longeron (28) s'étend d'une manière connue en soi sensiblement parallèlement au carter (4) de la barre de coupe (2), et que le longeron (28) et la jambe (29) s'étendent sensiblement dans le plan contenant les axes de rotation (15) des organes de coupe (5, 6, 7).

7. Faucheuse selon l'une des revendications 1 à 6, caractérisée par le fait que la structure support (3) comporte des moyens compensateurs des déformations et/ou des tolérances de fabrication de la barre de coupe (2) et/ou de la structure support (3) (36, 41, 42, 43, 44, 45, 47) qui autorisent le montage de la structure support (3) sur la barre de coupe (2).

8. Faucheuse selon la revendication 7, caractérisée par le fait que les moyens compensateurs des déformations et/ou des tolérances de fabrication (36, 41, 42, 43, 44, 45, 47) ont une structure permettant une compensation des défauts accumulés dans une direction sensiblement parallèle à la direction du carter (4) de la barre de coupe (2).

9. Faucheuse selon la revendication 7 ou 8, caractérisée par le fait que les moyens compensateurs des déformations et/ou des tolérances de fabrication (36, 41, 42, 43, 44, 45, 47) ont une structure permettant une compensation des défauts accumulés dans une direction sensiblement verticale.

10. Faucheuse selon la revendication 7, 8 ou 9, caractérisée par le fait que les moyens compensateurs des déformations et/ou des tolérances de fabrication (36, 41, 42, 43, 44, 45, 47) ont une structure permettant une compensation des défauts accumulés dans une direction horizontale sensiblement perpendiculaire à la direction du carter (4) de la barre de coupe (2).

11. Faucheuse selon la revendication 7, 8, 9 ou 10, caractérisée par le fait que les moyens compensateurs des déformations et/ou des tolérances de fabrication (36, 41, 42, 43, 44, 45, 47) ont une structure permettant une compensation des défauts angulaires de l'extrémité de la structure support (3) éloignée de la jambe (29).

12. Faucheuse selon la revendication 8, 9, 10 ou 11, caractérisée par le fait que les moyens compensateurs des déformations et/ou des tolérances de fabrication sont en partie constitués par des pièces intermédiaires (41, 42).

13. Faucheuse selon la revendication 12, caractérisée par le fait que les pièces intermédiaires (41, 42) s'étendent entre l'extrémité du longeron (28) éloignée de la jambe (29) et la partie correspondante de la barre de coupe (2).

14. Faucheuse selon la revendication 8 et l'une des revendications 12 ou 13, caractérisée par le fait que les pièces intermédiaires (41, 42) ont une structure permettant de faire varier la longueur de la structure support (3) entre l'articulation (36) et l'extrémité de la structure support (3) éloignée de la jambe (29).

15. Faucheuse selon la revendication 14, caractérisée par le fait que les pièces intermédiaires (41, 42) sont fixées sur le longeron (28) au moyen de boulons (45) traversant simultanément des premiers trous (44) aménagés dans lesdites pièces intermédiaires (41, 42) et des trous (43) aménagés dans le longeron (28), les trous (43) aménagés dans le longeron (28) et/ou les trous (44) aménagés dans les pièces intermédiaires (41, 42) ayant une forme qui permette de faire varier la longueur de la structure support (3) dans une direction sensiblement parallèle à la direction du carter (4) de la barre de coupe (2).

16. Faucheuse selon la revendication 15, caractérisée par le fait que les trous ayant une forme qui permette de faire varier la longueur de la structure support (3) dans une direction sensiblement parallèle à la direction du carter (4) de la barre de coupe (2), sont uniquement aménagés dans le longeron (28).

17. Faucheuse selon la revendication 15 ou 16, caractérisée par le fait que les trous ayant une forme qui permette de faire varier la longueur de la structure support (3), sont des trous oblongs s'étendant sensiblement dans une direction parallèle à la direction du carter (4) de la barre de coupe (2).

18. Faucheuse selon l'une des revendications 12 à 17, caractérisée par le fait que les pièces intermédiaires (41, 42) sont fixées sur la barre de coupe (2) au moyen de vis (46) traversant des deuxièmes trous (47) aménagés dans les pièces intermédiaires (41, 42) et vissées dans des trous (50) aménagés dans la barre de coupe (2).

19. Faucheuse selon la revendication 9 et la revendication 18, caractérisée par le fait que les deuxièmes trous (47) aménagés dans les pièces intermédiaires (41, 42), ont une forme qui autorise un décalage des pièces intermédiaires (41, 42) par rapport aux trous (50) aménagés dans la barre de coupe (2), dans une direction sensiblement verticale.

20. Faucheuse selon la revendication 10 et la revendication 18, caractérisée par le fait que les deuxièmes trous (47) aménagés dans les pièces intermédiaires (41, 42) ont une forme qui autorise un décalage des pièces intermédiaires (41, 42) par rapport aux trous (50) aménagés dans la barre de coupe (2), dans une direction horizontale sensiblement perpendiculaire à la direction du carter (4) de la barre de coupe (2).

21. Faucheuse selon la revendication 11 et la revendication 18, caractérisée par le fait que les deuxièmes trous (47) aménagés dans les pièces intermédiaires (41, 42), ont une forme qui autorise un décalage angulaire desdites pièces intermédiaires (41, 42) par rapport aux trous (50) aménagés dans la barre de coupe (2), sensiblement autour de l'axe longitudinal (51) du longeron (28).

22. Faucheuse selon la revendication 19, 20 ou 21, caractérisée par le fait que les deuxièmes trous (47) aménagés dans les pièces intermédiaires (41, 42) ont une dimension plus grande que le diamètre des vis (46) qui les traversent.

23. Faucheuse selon l'une des revendications 12 à 22, caractérisée par le fait que les pièces intermédiaires (41, 42) sont constituées par des équerres (41, 42).

24. Faucheuse selon l'une des revendications 1 à 23, caractérisée par le fait que l'extrémité du longeron (28) éloignée de la jambe (29), est d'une manière connue en soi fixée sur un dispositif de transmission (18) fixé sur la barre de coupe (2) et servant à l'entraînement en rotation des organes de coupe (5, 6, 7).

25. Faucheuse selon la revendication 24, caractérisée par le fait que le dispositif de transmission (18) s'étend d'une manière connue en soi au-dessus d'un organe de coupe (5) de la barre de coupe (2) et que l'entraînement en rotation des organes de coupe (5, 6, 7) s'opère par un arbre (9) traversant ledit organe de coupe (5) et couplant le dispositif de transmission (18) à des éléments d'entraînement logés dans le carter (4) de la barre de coupe (2).

26. Faucheuse selon la revendication 24 ou 25, caractérisée par le fait que le dispositif de transmission (18) est fixé à l'une des extrémités de la barre de coupe (2).

**Claims**

1. A mower comprising at least one mower unit (1) equipped with a cutter bar (2), on the upper surface (3) of which are arranged cutter members (5, 6, 7) mounted so as to rotate about upwardly directed axes (15) with the assistance of shafts (9, 10, 11) guided in rotation in the housing (4) of the cutter bar (2), and a support structure (3) arranged at a certain distance above the cutter bar (2) and connected to the cutter bar (2), where the said support structure (3) comprises a beam (28) which extends transversely to the direction of advance (A) and to which is connected a leg (29) extending downwards in the direction of a cutter member (7) of the cutter bar (2), the said leg (29) being connected to the shaft (11) of the said cutter member (7) by means of a bearing (132), characterised in that in a manner known per se the bearing (132) is formed by a cylindrical guide (31, 32), the axis of which merges with the axis (15) of the shaft (11) of the said cutter member (7), and that the connecting device (35) which connects the leg (29) to the beam (28) comprises a cylindrical joint (36) having an axis (37) which extends substantially perpendicularly to the plane containing the axes of rotation (15) of the cutter members (5, 6, 7).

2. A mower as claimed in Claim 1, characterised in that the axis (37) of the cylindrical joint (36) extends into the close vicinity of the axis (15) of the shaft (11) of the said cutter member (7), to which the leg (29) is connected.

3. A mower as claimed in Claim 2, characterised in that the axis (37) of the cylindrical joint (36) intersects the axis (15) of the shaft (11) of the said cutter member (7) to which the leg (29) is connected.

4. A mower as claimed in one of Claims 1 to 3, characterised in that the said support structure (3) is connected at its ends to the ends of the cutter bar (2), and that the leg (23) is connected to one of the ends of the beam (28) and extends downwardly in the direction of the outer cutter member (7) located at the corresponding end of the cutter bar (2).

5. A mower as claimed in one of Claims 1 to 4, characterised in that the cylindrical joint (36) is formed by a yoke (52) which is integrally connected to the upper part of the leg (29), between the wings (53, 54) of which the beam (28) extends, and by a journal (56) which passes through the wings (53, 54) of the yoke (52) and the beam (28).

6. A mower as claimed in one of Claims 1 to 5, characterised in that the beam (28) extends, in a manner known per se, substantially in parallel to the housing (4) of the cutter bar (2), and that the beam (28) and the leg (29) extend substantially in the plane which contains the axes of rotation (15) of the cutter members (5, 6, 7).

7. A mower as claimed in one of Claims 1 to 6, characterised in that the support structure (3) comprises means for compensating deformations and/or production tolerances of the cutter bar (2) and/or of the support structure (3) (36, 41, 42, 43, 44, 45, 47) which allow the support structure (3) to be mounted on the cutter bar (2).

8. A mower as claimed in Claim 7, characterised in that the means for compensating deformations and/or production tolerances (36, 41, 42, 43, 44, 45, 47) have a structure which allows the compensation of the faults accumulated in a direction substantially parallel to the direction of the housing (4) of the cutter bar (2).

9. A mower as claimed in Claim 7 or Claim 8, characterised in that the means for compensating deformations and/or production tolerances (36, 41, 42, 43, 44, 45, 47) have a structure which allows the compensation of the faults accumulated in a substantially vertical direction.

10. A mower as claimed n Claims 7, 8 or 9, characterised in that the means for compensating deformations and/or production tolerances (36, 41, 42, 43, 44, 45, 47) have a structure which permits a compensation of the faults accumulated in a horizontal direction substantially perpendicular to the direction of the housing (4) of the cutter bar (2).

11. A mower as claimed in Claims 7, 8, 9 or 10, characterised in that the means for compensating deformations and/or production tolerances (36, 41, 42, 43, 44, 45, 47) have a structure which allows the compensation of the angular faults of that end of the support structure (3) remote from the leg (29).

12. A mower as claimed in Claims 8, 9, 19 or 11, characterised in that the means for compensating deformations and/or production tolerances are partially formed by intermediate components (41, 42).

13. A mower as claimed in Claim 12, characterised in that the intermediate components (41, 42) extend between that end of the beam (28) remote from the leg (29) and the corresponding part of the cutter bar (2).

14. A mower as claimed in Claim 8 and one of Claims 12 or 13, characterised in that the intermediate components (41, 42) have a structure which allows the length of the support structure (3) between the joint (36) and that end of the support structure (3) remote from the leg (29) to be varied.

15. A mower as claimed in Claim 14, characterised in that the intermediate components (41, 42) are fixed to the beam (28) by means of bolts (45) which pass simultaneously through the first holes (44) formed in the said intermediate components (41, 42) and holes (43) formed in the beam (28), where the holes (43) formed in the beam (28) and/or the holes (44) formed in the intermediate components (41, 42) have a shape which allows the length of the support structure (3) to be varied in a direction substantially parallel to the direction of the housing (4) of the cutter bar (2).

16. A mower as claimed in Claim 15, characterised in that the holes which have a shape which allows the length of the support structure (3) to be varied in a direction substantially parallel to the direction of the housing (4) of the cutter bar (2) are arranged solely in the beam (28).

17. A mower as claimed in Claim 15 or Claim 16, characterised in that the holes which have a shape which allows the length of the support structure (3) to be varied are oblong holes extending substantially in a direction parallel to the direction of the housing (4) of the cutter bar (2).

18. A mower as claimed in one of Claims 12 to 17, characterised in that the intermediate components (41, 42) are fixed to the cutter bar (2) by means of screws (46) which pass through second holes (47) formed in the intermediate components (41, 42) and screwed into holes (50) formed in the cutter bar (2).

19. A mower as claimed in Claim 9 and Claim 18, characterised in that the second holes (47) formed in the intermediate components (41, 42) have a shape which allows the intermediate components (41, 42) to be offset in a substantially vertical direction in relation to the holes (50) formed in the cutter bar (2).

20. A mower as claimed in Claim 10 and Claim 18, characterised in that the second holes (47) formed in the intermediate components (41, 42) have a shape which allows the intermediate components (41, 42) to be offset in a substantially horizontal direction perpendicular to the direction of the housing (4) of the cutter bar (2) in relation to the holes (50) formed in the cutter bar (2).

21. A mower as claimed in Claim 11 and Claim 18, characterised in that the second holes (47) formed in the intermediate components (41, 42) have a shape which allows the said intermediate components (41, 42) to be angularly offset in relation to the holes (50) formed in the cutter bar (2), substantially about the longitudinal axis (51) of the beam (28).

22. A mower as claimed in Claims 19, 20 or 21, characterised in that the second holes (47) formed in the intermediate components (41, 42) are of a larger size than the diameter of the screws (46) which pass through them.

23. A mower as claimed in one of Claims 12 to 22, characterised in that the intermediate components (41, 42) are formed by angle brackets (41,42).

24. A mower as claimed in one of Claims 1 to 23, characterised in that that end of the beam (28) remote from the leg (29) is fixed, in a manner known per se, to a transmission device (18) itself fixed to the cutter bar (2) and serving to drive the cutter members (5, 6, 7) in rotation.

25. A mower as claimed in Claim 24, characterised in that the transmission device (18) extends, in a manner known per se, above a cutter member (5) of the cutter bar (2) and that the cutter members (5, 6, 7) are driven in rotation by means of a shaft (9) which passes through the said cutter member (5) and couples the transmission device (18) to drive elements housed in the housing (4) of the cutter bar (2).

26. A mower as claimed in Claim 24 or Claim 25, characterised in that the transmission device (18) is fixed to one of the ends of the cutter bar (2).

**Ansprüche**

1. Mähmaschine mit zumindest einer Mähergruppe (1), die einen Mähbalken (2), an dessen Oberseite (8) um aufrechtstehende Achsen (15) mittels im Gehäuse (4) des Mähbalkens (2) drehbar geführten Wellen (9, 10, 11) drehbar montierte Schneidorgane (5, 6, 7) angeordnet sind, und eine Abstützung (3) aufweist, die in einem gewissen Abstand über dem Mähbalken (2) angeordnet und mit dem Mähbalken (2) verbunden ist, welche Abstützung (3) einen sich quer zur Fortbewegungsrichtung (A) erstreckenden Träger (28) umfaßt, mit welchem ein Bein (29) verbunden ist, das sich nach unten in Richtung eines Schneidorgans (7) des Mähbalkens (2) erstreckt, welches Bein (29) mit der Welle (11) des Schneidorgans (7) über ein Lager (132) verbunden ist, dadurch gekennzeichnet, daß das Lager (132) in an sich bekannter Weise aus einer zylindrischen Führung (31, 32) besteht, deren Achse mit der Achse (15) der Welle (11) des Schneidorgans (7) zusammenfällt und daß das das Bein (29) mit dem Träger (28) verbindende Verbindungselement (35) ein Zylindergelenk (36) mit einer zu der die Drehachsen (15) der Schneidorgane (5, 6, 7) enthaltenden Ebene im wesentlichen rechtwinkelig gerichteten Achse (37) umfaßt.

2. Mähmaschine nach Anspruch 1, dadurch gekennzeichnet, daß die Achse (37) des Zylindergelenks (36) in die enge Nachbarschaft der Achse (15) der Welle (11) des Schneidorgans (7) reicht, mit welchem das Bein (29) verbunden ist.

3. Mähmaschine nach Anspruch 2, dadurch gekennzeichnet, daß die Achse (37) des Zylindergelenks (36) die Achse (15) der Welle (11) des Schneidorgans (7) schneidet, mit welchem das Bein (29) verbunden ist.

4. Mähmaschine nach einem der Ansprüche 1 bis 3, dadurch gekennzeichnet, daß die Abstützung (3) an ihren Enden mit den Enden des Mähbalkens (2) verbunden ist und daß das Bein (29) mit einem der Enden des Trägers (28) verbunden ist und sich nach unten in Richtung des äußeren Schneidorgans (7) erstreckt, das sich am entsprechenden Ende des Mähbalkens (2) befindet.

5. Mähmaschine nach einem der Ansprüche 1 bis 4, dadurch gekennzeichnet, daß das Zylindergelenk (36) aus einer mit dem Oberteil des Beins (29) fest verbundenen Gabel (52) zwischen deren Schenkeln (53, 54) sich der Träger (28) erstreckt, und aus einem die Schenkel (53, 54) der Gabel (52) und den Träger (28) durchsetzenden Lagerzapfen (56) besteht.

6. Mähmaschine nach einem der Ansprüche 1 bis 5, dadurch gekennzeichnet, daß sich der Träger (28) auf an sich bekannte Weise im wesentlichen parallel zum Gehäuse (4) des Mähbalkens (2) erstreckt und daß sich der Träger (28) und das Bein (29) im wesentlichen in der Ebene erstrecken, die die Drehachsen (15) der Schneidorgane (5, 6, 7) enthält.

7. Mähmaschine nach einem der Ansprüche 1 bis 6, dadurch gekennzeichnet, daß die Abstützung (3) Ausgleichselemente (36, 41, 42, 43, 44, 45, 47) für Deformationen und/oder Fertigungstoleranzen des Mähbalkens (2) und/oder der Abstützung (3) umfaßt, die die Montage der Abstützung (3) am Mähbalken (2) erlauben.

8. Mähmaschine nach Anspruch 7, dadurch gekennzeichnet, daß die Ausgleichselemente (36, 41, 42, 43, 44, 45, 47) für Deformationen und/oder Fertigungstoleranzen derart aufgebaut sind, daß sie einen Ausgleich akkumulierter Fehler in einer im wesentlichen zur Richtung des Gehäuses (4) des Mähbalkens (2) parallelen Richtung ermöglichen.

9. Mähmaschine nach Anspruch 7 oder 8, dadurch gekennzeichnet, daß die Ausgleichselemente (36, 41, 42, 43, 44, 45, 47) für Deformationen und/oder Fertigungstoleranzen derart aufgebaut sind, daß sie einen Ausgleich akkumulierter Fehler in einer im wesentlichen vertikalen Richtung ermöglichen.

10. Mähmaschine nach Anspruch 7, 8 oder 9, dadurch gekennzeichnet, daß die Ausgleichselemente (36, 41, 42, 43, 44, 45, 47) für Deformationen und/oder Fertigungstoleranzen derart aufgebaut sind, daß sie einen Ausgleich akkumulierter Fehler in einer horizontalen, im wesentlichen zur Richtung des Gehäuses (4) des Mähbalkens (2) rechtwinkeligen Richtung ermöglichen.

11. Mähmaschine nach Anspruch 7, 8, 9 oder 10, dadurch gekennzeichnet, daß die Ausgleichselemente (36, 41, 42, 43, 44, 45, 47) für Deformationen und/oder Fertigungstoleranzen derart aufgebaut sind, daß sie einen Ausgleich von Winkelabweichungen des vom Bein (29) entfernten Endes der Abstützung (3) ermöglichen.

12. Mähmaschine nach Anspruch 8, 9, 10 oder 11, dadurch gekennzeichnet, daß die Ausgleichselemente für Deformationen und/oder Fertigungstoleranzen teilweise aus Zwischenstücken (41, 42) bestehen.

13. Mähmaschine nach Anspruch 12, dadurch gekennzeichnet, daß sich die Zwischenstücke (41, 42) zwischen dem vom Bein (29) entfernten Ende des Trägers (28) und dem dem Mähbalken (2) entsprechenden Teil erstrecken.

14. Mähmaschine nach Anspruch 8 und einem der Ansprüche 12 oder 13, dadurch gekennzeichnet, daß die Zwischenstücke (41, 42) einen Aufbau haben, der es ermöglicht, die Länge der Abstützung (3) zwischen dem Gelenk (36) und dem vom Bein (29) entfernten Ende der Abstützung (3) variieren zu lassen.

15. Mähmaschine nach Anspruch 14, dadurch gekennzeichnet, daß die Zwischenstücke (41, 42) am Träger (28) mittels Bolzen (45) befestigt sind, die gleichzeitig erste in die Zwischenstücke (41, 42) gebohrte Löcher (44) und in den Träger (28) gebohrte Löcher (43) durchsetzen, wobei die in den Träger (28) gebohrten Löcher (43) und/oder die in die Zwischenstücke (41, 42) gebohrten Löcher (44) eine Form haben, die es ermöglicht, die Länge der Abstützung (3) in einer im wesentlichen zur Richtung des Gehäuses (4) des Mähbalkens (2) parallelen Richtung variieren zu lassen.

16. Mähmaschine nach Anspruch 15, dadurch gekennzeichnet, daß die Löcher, die eine Form haben, die es ermöglicht, die Länge der Abstützung (3) in einer im wesentlichen zur Richtung des Gehäuses (4) des Mähbalkens (2) parallelen Richtung variieren zu lassen, ausschließlich in den Träger (28) gebohrt sind.

17. Mähmaschine nach Anspruch 15 oder 16, dadurch gekennzeichnet, daß die Löcher, die eine Form haben, die es ermöglicht, die Länge der Abstützung (3) variieren zu lassen, Langlöcher sind, die sich im wesentlichen in einer zur Richtung des Gehäuses (4) des Mähbalkens (2) parallelen Richtung erstrecken.

18. Mähmaschine nach einem der Ansprüche 12 bis 17, dadurch gekennzeichnet, daß die Zwischenstücke (41, 42) an dem Mähbalken (2) mittels Schrauben (46) befestigt sind, die zweite, in die Zwischenstücke (41, 42) gebohrte Löcher (47) durchsetzen und in Löcher (50) geschraubt sind, die in den Mähbalken (2) gebohrt sind.

19. Mähmaschine nach Anspruch 9 und Anspruch 18, dadurch gekennzeichnet, daß die zweiten, in die Zwischenstücke (41, 42) gebohrten Löcher (47) eine Form haben, die eine Verschiebung der Zwischenstücke (41, 42) in bezug auf in den Mähbalken (2) gebohrte Löcher (50) in einer im wesentlichen vertikalen Richtung erlauben.

20. Mähmaschine nach Anspruch 10 und Anspruch 18, dadurch gekennzeichnet, daß die zweiten, in die Zwischenstücke (41, 42) gebohrten Löcher (47) eine Form haben, die eine Verschiebung der Zwischenstücke (41, 42) in bezug auf in den Mähbalken (2) gebohrte Löcher (50) in einer horizontalen, zur Richtung des Gehäuses (4) des Mähbalkens (2) im wesentlichen rechtwinkeligen Richtung erlauben.

21. Mähmaschine nach Anspruch 11 und Anspruch 18, dadurch gekennzeichnet, daß die zweiten, in die Zwischenstücke (41, 42) gebohrten Löcher (47) eine Form haben, die eine Winkelverschiebung der Zwischenstücke (41, 42) in bezug auf in den Mähbalken (2) gebohrte Löcher (50) im wesentlichen um die Längsachse (51) des Langlochs (28) erlauben.

22. Mähmaschine nach Anspruch 19, 20 oder 21, dadurch gekennzeichnet, daß die zweiten, in die Zwischenstücke (41, 42) gebohrten Löcher (47) eine Abmessung haben, die größer als der Durchmesser der sie durchsetzenden Schrauben (46) ist.

23. Mähmaschine nach einem der Ansprüche 12 bis 22, dadurch gekennzeichnet, daß die Zwischenstücke (41, 42) aus Winkelelementen (41, 42) bestehen.

24. Mähmaschine nach einem der Ansprüche 1 bis 23, dadurch gekennzeichnet, daß das vom Bein (29) entfernte Ende des Langlochs (28) in an sich bekannter Weise an einer an dem Mähbalken (2) befestigten und für den Rotationsantrieb der Schneidorgane (5 6, 7) dienenden Transmissionseinrichtung (18) fixiert ist.

25. Mähmaschine nach Anspruch 24, dadurch gekennzeichnet, daß sich die Transmissionseinrichtung (18) in an sich bekannter Weise oberhalb eines Schneidorgans (5) des Mähbalkens (2) erstreckt und daß der Rotationsantrieb der Schneidorgane (5, 6, 7) über eine Welle (9) erfolgt, die das Schneidorgan (5) quert und die Transmissionseinrichtung (18) mit Antriebselementen kuppelt, die im Gehäuse (4) des Mähbalkens (2) untergebracht sind.

26. Mähmaschine nach Anspruch 24 oder 25, dadurch gekennzeichnet, daß die Transmissionseinrichtung (18) an einem Ende des Mähbalkens (2) befestigt ist.

FIG.1

FIG. 2

## FIG.3

## FIG.4

FIG.5